# EUROPEAN PATENT SPECIFICATION

(11) **EP 1 981 222 B1**
(45) Date of publication and mention of the grant of the patent: **29.04.2009**
(21) Application number: 08003524.9
(22) Date of filing: 21.03.2007
(51) Int. Cl.: H04L 12/56, H04W 72/12

(54) **Method of providing a VoIP connection**
Verfahren zur Bereitstellung einer VoIP-Verbindung
Procédé pour fournir une connexion VoIP

(43) Date of publication of application: 15.10.2008
(62) Divisional of application: 07005775.7
(73) Proprietor: Alcatel-Lucent USA Inc., Murray Hill NJ 07974-0636 (US)
(72) Inventor: Faniuolo, Antonella, SN252AU Swindon Wiltshire (GB); Bachl, Rainer, 90425 Nünberg (DE); Schneider, Matthias, 90408 Nürnberg (DE)
(74) Representative: Schmidt, Werner Karl

(56) References cited:
- WO-A-20/06138379
- US-A1- 2001 043 577

## Description

The present invention relates to a method of providing a VoIP connection through wireless communication links of a packet based wireless communication system, as well as to a base station and a terminal for supporting such VoIP connections through wireless communications links (VoIP = Voice over Internet Protocol).

In next-generation packet-based wireless systems like UMTS Long-term Evolution, VoIP will be an important service to be supported (UMTS = Universal Mobile Telecommunications System). However, VoIP data has unique traffic characteristics that differ from other packet data services. VoIP packets are very small, equally sized and periodically created at constant intervals and face tight delay and jitter requirements.

Considering these characteristics, dynamic scheduling like being used for other data services would lead to an enormous amount of signaling overhead. With dynamic scheduling, each user inside a cell is signaled the designated transmission resources explicitly once every scheduler interval via a special control channel. In case the scheduled data blocks are very small and numerous the control channel may reach its maximum capacity limit although the actual data channel has not reached the peak of its capacity. Furthermore, the dynamic scheduling of equally sized VolP packets leads to large amounts of redundant signaling since explicit signaling is used for each packet in order to allocate the same amount of resources at a constant time interval.

One way to tackle the problem of increasing the signaling overhead is to employ a scheme called persistent scheduling. According to this scheme, a resource is allocated only once at the beginning of the recurring transmissions at specifically time intervals. During the persistent scheduled transmission, no additional signaling overhead is required after the initial resource allocation, thus reducing the control channel overhead significantly.

One disadvantage of persistent scheduling is the inefficient use of resources. VoIP data consists of about 50 % silence. In case the persistently scheduled data consists of VoIP, only silence indicators (= SID) will be transmitted at a very low rate during periods of silence. The allocated resources do not transmit actual VoIP data during these periods but are unavailable to other, dynamically scheduled data. One way to address this issue is to explicitly revoke the persistent allocation at the beginning of a silence period and re-issue the persistent grant once again VolP data packets have to be transmitted. However, this approach leads to rather large additional explicit signaling messages.

The document WO 2006/138379 A2 describes systems and methodologies that facilitate resolving resource assignment conflicts between access terminals in a wireless communication environment. A first access terminal may receive a persistent, or "sticky" assignment of a set of resources, such as subcarriers. In the event that a second access terminal requires a brief resource assignment, a time-limited, or "non-sticky" resource assignment may be granted to the second access terminal. If a resource in the non-sticky assignment is already assigned to the first access terminal via the sticky assignment, the first access terminal may receive an indication of the conflict along with information related to a duration of the non-sticky assignment, may surrender the conflicted resource, and may resume control over the conflicted resource after the termination of the non-sticky assignment.

It is the object of the present invention to improve a VoIP connection through a packet based wireless communication system.

The object of the present invention is achieved by a method of providing a VoIP connection through wireless communication links of a packet-based wireless communication system, the wireless communication links comprising an uplink transmission path from a terminal to a base station and a downlink transmission path from the base station to the terminal, each of the uplink and downlink transmission paths having a control channel and at least one data channel, whereby the method comprises the steps of allocating a persistent grant of network resources to the VoIP connection on the uplink transmission path and/or the downlink transmission path; generating a deactivation control message for suspending the persistent grant of network resources allocated to the VoIP connection on detection of an end of an active voice period on the uplink and/or downlink data channel and/or a reactivation control message for re-issuing the persistent grant of network resources allocated to the VoIP connection on detection of a begin of an active voice period on the uplink and/or downlink data channel; transmitting the deactivation and/or reactivation control message on the data channel and/or control channel; receiving the deactivation and/or reactivation control message at the base station and/or the terminal; and triggered by the received deactivation and/or reactivation control message, suspending and/or re-issuing the persistent grant of network resources allocated to the VoIP connection on the uplink and/or downlink data channel. The object of the present invention is also achieved by a base station for providing VoIP connections through wireless communication links of a packet-based wireless communication system, the wireless communication links comprising an uplink transmission path from a terminal to the base station and a downlink transmission path from the base station to the terminal, each of the uplink and downlink transmission paths having a control channel and at least one data channel, whereby the base station comprises a control unit adapted to generate a deactivation control message for suspending a persistent grant of network resources allocated to the VoIP connection on detection of an end of an active voice period on the downlink data channel and/or a reactivation control message for re-issuing the persistent grant of network resources allocated to the VoIP connection on detection of a begin of an active voice period on the downlink data channel; and the control unit is further adapted to transmit the deactivation and/or reactivation control message on the data channel and/or control channel to the terminal to trigger the suspension and/or re-issue of the persistent grant of network resources allocated to the VoIP connection on the downlink data channel. And the object of the present invention is achieved by a terminal for providing a VolP connection through wireless communication links of a packet-based wireless communication system, the wireless communication links comprising an uplink transmission path from a terminal to the base station and a downlink transmission path from the base station to the terminal, each of the uplink and downlink transmission paths having a control channel and at least one data channel, whereby the terminal comprises a control unit adapted to generate a deactivation control message for suspending a persistent grant of network resources allocated to the VoIP connection on detection of an end of an active voice period on the uplink data channel and/or a reactivation control message for re-issuing the persistent grant of network resources allocated to the VolP connection on detection of a begin of an active voice period on the uplink data channel; and the control unit is further adapted to transmit the deactivation and/or reactivation control message on the data channel and/or control channel to the base station to trigger the suspension and/or re-issue of the persistent grant of network resources allocated to the VolP connection on the uplink data channel.

Downlink refers to a transmission direction of data and/or control messages transmitted from a base station to a terminal, while uplink refers to the opposite direction.

The present invention helps to reduce control traffic in a VolP connection. The control signaling overhead is minimized for VolP users by joint persistent allocation of uplink and downlink. Spectral efficiency is increased by reducing the control signaling overhead and fast deactivation and reactivation of persistently scheduled physical resources in silent periods. As a result, more Vol P users can be supported in a mobile communication system.

The invention covers an important aspect of the physical layer for wireless VolP communications. In particular it provides an efficient physical resource allocation for wireless VoIP transmission. White reducing the signaling overhead by means of persistent scheduling, the present invention maintains the flexibility to temporarily deactivate persistent resource allocations in silent periods and to temporarily de-allocate resources of the communication system in silent periods, respectively.

Instead of issuing two separate grants in order to persistently schedule uplink and downlink the present approach schedules the uplink and downlink simultaneously in a single control channel message. This means that a new message is defined to be used on the downlink control channel for a joint persistent resource allocation for uplink and downlink. The joint control message triggers the involved base station and terminal to follow the scheduled allocation of network resources. The joint control message may specify the parameters of the allocations of network resources, i.e. it specifies for example a frequency range and one or more time intervals when data transmission can be executed. The involved connection equipment, i.e. the base station and the terminal, adopt these parameters for their transmission and reception functionality. The joint control message indicates to the base station and the terminal the transmission and reception parameters, e.g. the time intervals and the frequency ranges, that determine the conditions binding for the base station and the terminal to receive and transmit data packets.

Further advantages are achieved by the embodiments of the invention indicated by the dependent claims.

According to a preferred embodiment of the invention, the joint control message includes only once an identification of the terminal. Thus, the joint control message contains the user equipment (= UE) ID only once, saving the overhead of having to transmit the address of the respective user two times (ID = identification/identifier). In case downlink and uplink grants are issued via a single message, the UE ID and the transmission period have to be transmitted only once, the CRC (= Cyclic Redundancy Check) calculated only once.

Preferably, only one time interval field is included in the joint control message if the time interval of transmission is the same for both the uplink transmission path and the downlink transmission path of the VolP connection, which is very likely for VoIP. To transmit only one time interval field in the joint control message and using it for both uplink and downlink saves another redundant field.

Preferably, the deactivation control message is attached, in the uplink and/or downlink transmission path, to a data packet transmitted via the data channel. The base station or the terminal, when receiving this deactivation control message attached to a data packet, discontinue the use of allocated network resources on the uplink and/or downlink data channel and release the network resources for other communication connections.

The deactivation/activation control messages are very small control messages that may be used to deactivate the persistent grant on detection of a silence period and reactivate the persistent grant when an active voice data period begins again. The size of these deactivation/reactivation messages can be as low as a single bit. The deactivation control message in uplink and downlink may be either piggybacked on the last data segment of the active voice period or piggybacked on the first SID indicating a silence period. After that only control information in the uplink is transmitted via the controlled channel (e.g. CQI = Channel Quality information) but not user data (at least for this radio bearer).

It is also possible that the deactivation message in uplink or downlink is sent by using an explicit message transmitted via the persistently scheduled resource before the silence period.

In order to reactivate the persistent grant in the uplink direction, the reactivation message may be piggybacked on another control channel message. Preferably, the reactivation control message is attached in the uplink transmission path to a control message that is transmitted via the control channel from the terminal to the base station, in particular to a control message related to the channel quality, for example a CQI message. Once the base station receives this reactivation control message attached to a data message or a control message, the base station re-issues the persistent grant of network resources allocated to the VolP connection on the uplink data channel. Preferably, the grant of network resources has not been completely deleted after the receipt of the deactivation control message but has been kept in a suspension state which can be easily reactivated when receiving a reactivation control message. However, it is also possible that the grant of network resources is completely revoked after a receipt of a deactivation control message and has to be generated anew when receiving a reactivation control message.

According to a preferred embodiment of the invention, an explicit reactivation message may be sent via the uplink control channel in case no control channel message is to be sent where the reactivation message can be attached to. Again this explicit reactivation message is still a lot smaller than a complete scheduling request, The reactivation control message which is sent as an explicit control message via the control channel is independent of other control messages that are transmitted from the terminal to the base station. When the base station receives the explicit reactivation control message, the base station re-issues the persistent grant of network resources allocated to the VolP connection on the uplink data channel.

Preferably, in order to reactivate a downlink grant, a similar explicit message is sent via a downlink control channel. Here, the reactivation control message is sent in the downlink transmission path as an explicit control message independently of other control messages that are transmitted from the base station to the terminal. Once the terminal receives this reactivation control message, the terminal re-issues the persistent grant of network resources allocated to the VolP connection on the downlink data channel. Preferably, the terminal has not totally deleted the grant of network resources when receiving a deactivation control message but has put this grant into a state of suspension which can be easily reactivated when receiving a reactivation message. Again this reactivation message sent on the downlink control channel is a lot smaller than a new persistent grant of network resources.

Preferably, the deactivation control messages that are used for the temporarily deactivation of persistently scheduled resources in silent periods, are sent inband in the data transmission channels. The reactivation control messages provide a fast reactivation of persistently scheduled resources on downlink and uplink and, the reactivation control message that is sent on the uplink control channel provides a fast request for reactivation of network resources on uplink, piggybacked on other uplink transmissions that take place to maintain uplink synchronization or channel quality information (= CQI).

These as well as other features and advantages of the invention will be better appreciated by reading the following detailed description of presently preferred exemplary embodiments taken in conjunction with the accompanying drawings of which:
- Figure 1: is a block diagram of a communication system
- Figure 2: is a schematic drawing of a wireless communication link between a base station and a terminal
- Figure 3: is a block diagram showing details of a base station and a terminal according to the present invention
- Figure 4: is a table giving details of an exemplary joint control message according to the present invention

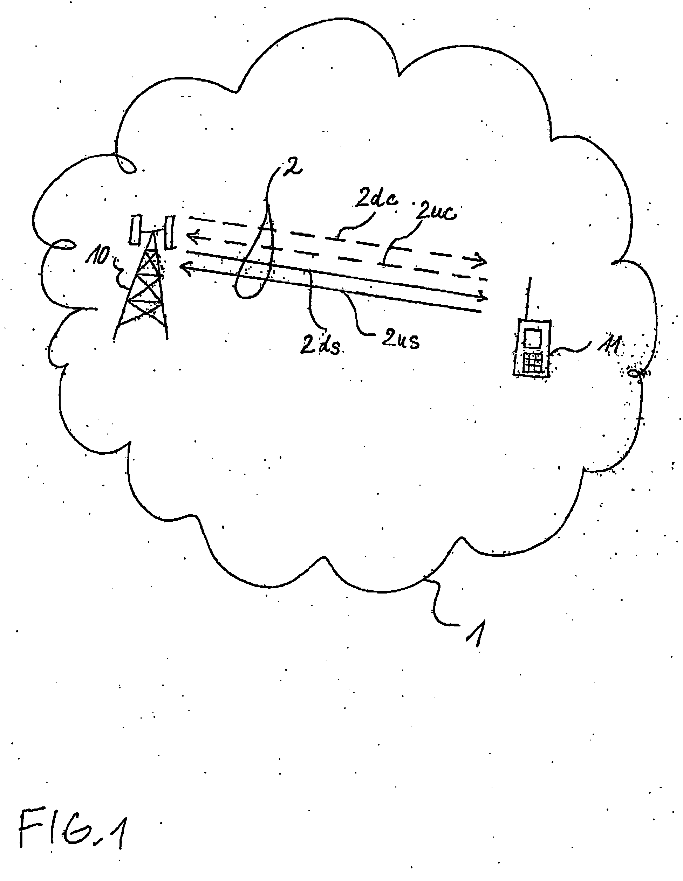

Figure 1 shows a packet based wireless communication system 1, a base station 10, a wireless mobile terminal 11, and a wireless communication link 2 between the base station 10 and the terminal 11 comprising a downlink control channel 2dc, an uplink control channel 2uc, a downlink data channel 2ds and an uplink data channel 2us. The letter "s" in the reference signs 2ds and 2us indicates that the data sent on the data channel is "speech". Preferably, the wireless communication link 2 is a VolP communication link.

The packet based wireless communication system 1 may be any system of networks that are suited for the transport of packet-based communication data, for example a UMTS network. The base station 10 provides the sending and receiving functions for the wireless communication link 2 over the air interface. The base station 10 provides the wireless terminal 11 with a connection to other wireless communication networks or with a wireline data network, telephone network like the PSTN (= Public Switched Telephone Network) or combined IP based data/telephone network. The mobile terminal 11 comprises all sending and receiving functions to intercommunicate with the base station 10 via the air interface. The terminal 11 is an IP telephone providing telephone services by means of a VoIP communication controlled by a SIP protocol (SIP = Session Initiation Protocol).

The downlink control channel 2dc and the downlink data channel 2ds represent the downlink transmission path, while the uplink control channel 2uc and the uplink data channel 2us represent the uplink transmission path.

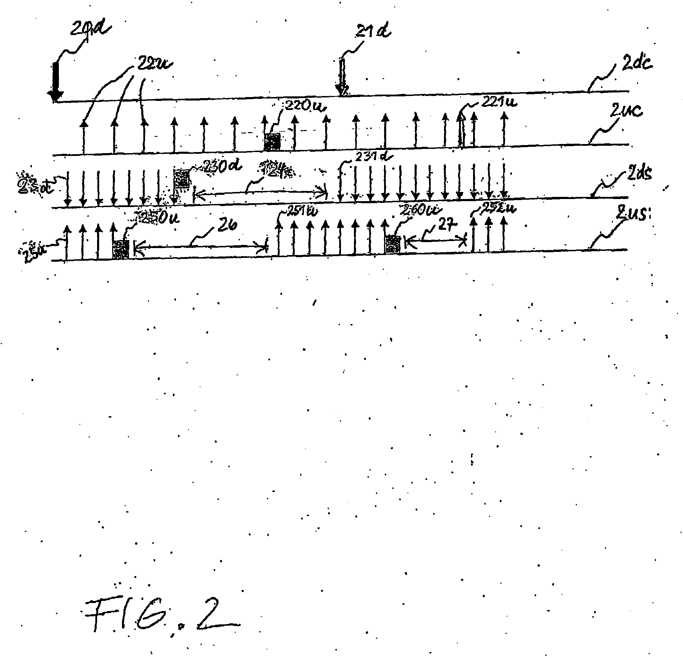

Figure 2 exemplifies a flow of control messages and data messages on the wireless communication link 2, i.e., the VoIP connection. Figure 2 shows the downlink control channel 2dc, the uplink control channel 2uc, the downlink data channel 2ds, and the uplink data channel 2us. Downlink means that the sender is the base station 10 and the receiver is a terminal 11. Uplink means that the sender is the terminal 11 and the receiver is the base station 10.

Initially the base station 10 sends a joint control message 20d on the downlink control channel 2dc for allocation of a persistent grant of network resources to the VoIP connection 2 both on the uplink transmission path and the downlink transmission path. Consequently, the base station 10 sends data packets 23d on the downlink data channel 2ds, and the terminal 11 sends data packets 25u on the uplink data channel 2us. In parallel to the transmission of data packets, the terminal 11 transmits control messages 22u on the uplink control channel 2uc whereby the control messages 22u contain control information, for example CQI.

Once the base station 10 detects a silence period 24 in the downlink data packet stream, the base station 10 attaches a deactivation control message 230d to the last data packet of the active voice period 23d. Thus, during the silence period 24 the network resources on the downlink channel 2ds can be reused for another communication connection. Similarly, once the terminal detects a silence period 26 in the data stream 2us, the terminal attaches a deactivation control message 250u to the last data packet sent in the uplink data stream 25u. Likewise the network resources in the uplink data channel 2us can be reused for another communication connection during the silence period 26.

If the terminal detects that an active voice stream begins again with a data packet 251 u, the terminal attaches a reactivation control message 220u to a control message sent on the uplink control channel 2uc. If the base station detects the end of the silence period 24 and the restart of data packets 231 d, the base station 10 transmits an explicit reactivation control message 21 d on the downlink control channel 2dc. This reactivation control message 21 d informs the terminal 11 to reallocate the suspended grant of network resources to the prior VolP connection.

After a while, the terminal 11 detects again a silence period 27 and consequently attaches a deactivation control message 260u on the uplink data channel 2us to the last data packet sent during the prior active voice period. This deactivation control message informs the base station 10 about the silence period 27 so that the base station 10 can reuse the released network resources for another communication connection. On detection of the restart of the data packets 252u on the uplink data channel 2us, the terminal 11 sends a reactivation control message 221u on the uplink control channel 2uc. As there is no standard control message to be sent at this very moment, for example a CQI message, the terminal 11 sends an explicit reactivation control message 221 u which is sent independently from the other control messages 22u on the uplink control channel 2uc.

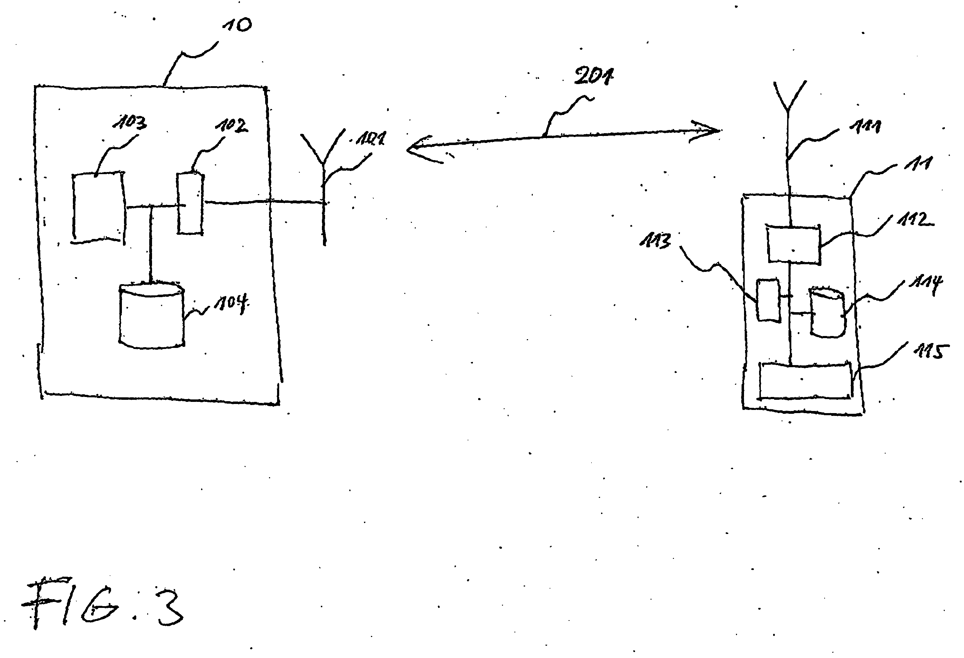

Figure 3 gives an embodiment of a base station and a terminal according to the present invention. The base station 10 comprises a transceiver with an antenna 101 and a communication interface 102, a control unit 103 and a memory 104. The terminal 11 comprises a transceiver with an antenna 111 and a communication interface 112, a control unit 113, a memory 114, and an input/output unit 115, By means of the transceivers of the base station 10 and the terminal 11, the base station 10 and the terminal 11 intercommunicate via the air interface 201.

The control unit 103 of the base station 10 is adapted to send a joint control message and to send and receive deactivation and/or reactivation messages. The memory 104 holds a computer program product for executing the steps of generating a joint control message and generating a reactivation/deactivation control message. The control unit 103 is composed of one or several interlinked computers that is a hardware platform, a software platform basing on the hardware platform and one or more application programs executed by the system platform formed by the software and hardware platform. The functionalities of the control unit 103 are provided by the execution of these application programs. The application programs or a selected part of these application programs constitute a computer software product providing a connection control as described above when executed on the system platform. Further, such computer software product is constituted by the storage medium 104 storing these application programs or said selected part of application programs.

The control unit 113 of the terminal 11 is adapted to receive a joint control message and to send and receive deactivation and/or reactivation messages. The memory 104 holds a computer program product for executing the steps of generating a reactivation/deactivation control message. The control unit 113 is composed of one or several interlinked computers that is a hardware platform, a software platform basing on the hardware platform and one or more application programs executed by the system platform formed by the software and hardware platform. The functionalities of the control unit 113 are provided by the execution of these application programs. The application programs or a selected part of these application programs constitute a computer software product providing a connection control as described above when executed on the system platform. Further, such computer software product is constituted by the storage medium 104 storing these application programs or said selected part of application programs.

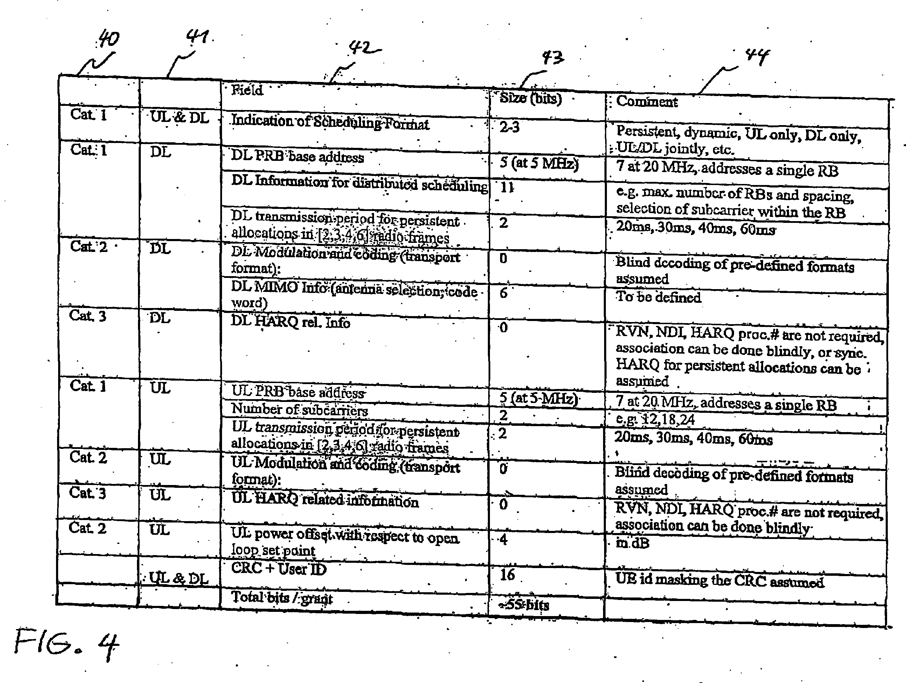

Fig. 4 shows format details of an embodiment of a joint control channel message for jointly scheduling network resources on both the uplink transmission path and the downlink transmission path.

The table given in Fig. 4 specifies fields of the exemplary message format and provides information about the fields. Column 40 indicates information categories 1 to 3 a field is classified to, column 40 gives the reference to the uplink (= UL) and/or downlink (= DL) path, column 42 describes the content of a field, column 43 specifies the size of a field, given in the unit "bits", and column 44 provides a comment.

In column 42, PRB means Physical Resource Block, MIMO means Multiple Input Multiple Output, HARQ means Hybrid Automatic Repeat Request, CRC means Cyclic Redundancy Check.

In column 44, RB means Radio Band, RVN means Redundancy Version Number, NDI means New Data Indicator, UE means User Equipment.

## Claims

1. A method of providing a VoIP connection through wireless communication links (2) of a packet-based wireless communication system (1), the wireless communication links (2) comprising an uplink transmission path (2uc, 2us) from a terminal (11) to a base station (10) and a downlink transmission path (2dc, 2ds) from the base station (10) to the terminal (11), each of the uplink and downlink transmission paths (2uc, 2us, 2dc, 2ds) having a control channel (2uc, 2dc) and at least one data channel (2us, 2ds),
**characterized in**
**that** the method comprises the steps of:
allocating a persistent grant of network resources to the VoIP connection on the uplink transmission path (2uc, 2us) and/or on the downlink transmission path (2dc, 2ds);
generating a deactivation control message (230d, 250u, 260u) for suspending the persistent grant of network resources allocated to the VoIP connection on detection of an end (24, 26, 27) of an active voice period on the uplink and/or downlink data channel (2us, 2ds) and/or a reactivation control message (21d, 220u, 221u) for re-issuing the persistent grant of network resources allocated to the VoIP connection on detection of a begin (231d, 251u. 252u) of an active voice period on the uplink and/or downlink data channel (2us, 2ds);
transmitting the reactivation and/or reactivation control message (230d, 250u, 260u, 21d, 220u, 221 u) on the data channel and/or control channel (2dc, 2uc, 2ds, 2us);
receiving the deactivation and/or reactivation control message at the base station (10) and/or the terminal (11); and
triggered by the received deactivation and/or reactivation control message (230d, 250u, 260u, 21d, 220u, 221u), suspending and/or re-issuing the persistent grant of network resources allocated to the VoIP connection on the uplink and/or downlink data channel (2us, 2ds).

2. The method of claim 1,
**characterized in**
**that** the method comprises the further steps of:
attaching, in the uplink and/or downlink transmission path (2uc, 2us, 2dc, 2ds), the deactivation control message (230d, 250u, 260u) to a data packet transmitted via the data channel (2us, 2ds); and
triggered by the received deactivation control message (230d, 250u, 260u), suspending the persistent grant of network resources allocated to the VoIP connection on the uplink and/or downlink data channel (2us, 2ds).

3. The method of claim 1,
**characterized in**
**that** the method comprises the further steps of:
attaching, in the uplink transmission path (2uc, 2us), the reactivation control message (220u) to a control message that is transmitted via the control channel (2uc) from the terminal (11) to the base station (10), in particular to a control message related to the channel quality; and
triggered by the received reactivation control message (220u), re-issuing the persistent grant of network resources allocated to the VoIP connection on the uplink data channel (2us):

4. The method of claim 1,
**characterized in**
**that** the method comprises the further steps of:
sending, in the uplink transmission path (2uc, 2us), the reactivation control message (221u) as an explicit control message via the control channel (2uc) independently of other control messages that are transmitted from the terminal (11) to the base station (10); and
triggered by the received reactivation control message (221u), re-issuing the persistent grant of network resources allocated to the VoIP connection on the uplink data channel (2us).

5. The method of claim 1,
**characterized in**
**that** the method comprises the further steps of:
sending, in the downlink transmission path (2dc, 2ds); the reactivation control message (21d) as an explicit control message independently of other control messages that are transmitted from the base station (10) to the terminal (11); and
triggered by the received reactivation control message (21d), re-issuing the persistent grant of network resources allocated to the VoIP connection on the downlink data channel (2ds).

6. A base station (10) for providing VoIP connections through wireless communication links (2) of a packet-based wireless communication system (1), the wireless communication links (2) comprising an uplink transmission path (2uc, 2us) from a terminal (11) to the base station (10) and a downlink transmission path (2dc, 2ds) from the base station (10) to the terminal (11), each of the uplink and downlink transmission paths (2uc, 2us, 2dc, 2ds) having a control channel (2uc, 2dc) and at least one data channel (2us, 2ds),
**characterized in**
**that** the base station (10) comprises a control unit (103) adapted to generate a deactivation control message (230d) for suspending a persistent grant of network resources allocated to the VoIP connection on detection of an end (24) of an active voice period on the downlink data channel (2ds) and/or a reactivation control message (21d) for re-issuing the persistent grant of network resources allocated to the VoIP connection on detection of a begin (231d) of an active voice period on the downlink data channel (2ds); and the control unit (103) is further adapted to transmit the deactivation and/or reactivation control message (230d, 21d) on the data channel (2ds) and/or control channel (2dc) to the terminal (11) to trigger the suspension and/or re-issue of the persistent grant of network resources allocated to the VoIP connection on the downlink data channel (2ds).

7. A terminal (11) for providing a VoIP connection through wireless communication links (2) of a packet-based wireless communication system (1), the wireless communication links (2) comprising an uplink transmission path (2uc, 2us) from the terminal (11) to a base station (10) and a downlink transmission path (2dc, 2ds) from the base station (10) to the terminal (11), each of the uplink and downlink transmission paths (2uc, 2us, 2dc, 2ds) having a control channel (2uc, 2dc) and at least one data channel (2us, 2ds),
**characterized in**
**that** the terminal (11) comprises a control unit (113) adapted to generate a deactivation control message (250u, 260u) for suspending a persistent grant of network resources allocated to the VoIP connection on detection of an end (26, 27) of an active voice period on the uplink data channel (2us) and/or a reactivation control message (220u, 221 u) for re-issuing the persistent grant of network resources allocated to the VoIP connection on detection of a begin (251 u, 252u) of an active voice period on the uplink data channel (2us); and the control unit (113) is further adapted to transmit the deactivation and/or reactivation control message (250u, 260u, 220u, 221u) on the data channel (2us) and/or control channel (2uc) to the base station (10) to trigger the suspension and/or rue-tissue of the persistent grant of network resources allocated to the VoIP connection on the uplink data channel (2us).

## Patentansprüche

1. Ein Verfahren zur Bereitstellung einer VoIP-Verbindung über drahtlose Kommunikationsverbindungen (2) eines paketbasierten drahtlosen Kommunikationssystems (1), wobei die drahtlosen Kommunikationsverbindungen (2) einen Übertragungspfad für die Aufwärtsrichtung (2uc, 2us) von einem Endgerät (11) zu einer Basisstation (10) und einen Übertragungspfad für die Abwärtsrichtung (2dc, 2ds) von der Basisstation (10) zum Endgerät (11) umfassen, wobei sowohl der Übertragungspfad für die Aufwärtsrichtung als auch der Übertragungspfad für die Abwärtsrichtung (2uc, 2us, 2dc, 2ds) über einen Kontrollkanal (2uc, 2dc) und mindestens einen Datenkanal (2us, 2ds) verfügen,
**dadurch gekennzeichnet,**
**dass** das Verfahren die folgenden Schritte umfasst:
Erteilen einer ständigen Bereitstellung von Netzwerkbetriebsmitteln an die VoIP-Verbindung auf dem Übertragungspfad für die Aufwärtsrichtung (2uc, 2us) und/oder dem Übertragungspfad für die Abwärtsrichtung (2dc, 2ds);
Erzeugen einer Deaktivierungs-Kontrollnachricht (230d, 250u, 260u), um die ständige Bereitstellung von der VoIP-Verbindung zugeteilten Netzwerkbetriebsmitteln bei Erkennen eines Endes (24, 26, 27) einer aktiven Sprachperiode auf dem Datenkanal für die Aufwärtsrichtung und/oder dem Datenkanal für die Abwärtsrichtung (2us, 2ds) zu unterbrechen und/oder einer Reaktivierungs-Kontrollnachricht (21d, 220u, 221u), um die ständige Bereitstellung von der VoIP-Verbindung zugeteilten Netzwerkbetriebsmitteln bei Erkennen eines Anfangs (231 d, 251 u, 252u) einer aktiven Sprachperiode auf dem Datenkanal für die Aufwärtsrichtung und/oder dem Datenkanal für die Abwärtsrichtung (2us, 2ds) erneut zu erteilen;
Übertragen der Deaktivierungs- und/oder Reaktivierungs-Kontrollnachricht (230d, 250u, 260u, 21d, 220u, 221u) auf dem Datenkanal und/oder dem Kontrollkanal (2dc, 2uc, 2ds, 2us);
Empfangen der Deaktivierungs- und/oder Reaktivierungs-Kontrollnachricht an der Basisstation (10) und/oder an dem Endgerät (11 und
getriggert von der empfangenen Deaktivierungs- und/oder Reaktlvierungs-Kontrollnachricht (230d. 250u, 260u, 21d, 220u, 221u), Unterbrechen und/oder erneutes Erteilen der ständigen Bereitstellung von an die VoIP-Verbindung auf dem Datenkanal für die Aufwärtsrichtung und/oder dem Datenkanal für die Abwärtsrichtung (2us, 2ds) zugeteilten Netzwerkbetrlebsmitteln.

2. Das Verfahren nach Anspruch 1,
**dadurch gekennzeichnet,**
**dass** das Verfahren weiterhin die folgenden Schritte umfasst:
Anhängen, in dem Übertragungspfad für die Aufwärtsrichtung und/oder dem Übertragungspfad für die Abwärtsrichtung (2uc, 2us, 2dc, 2ds), der Deaktivierungs-Kontrollnachricht (230d, 250u, 260u) an ein über den Datenkanal (2us, 2ds) übertragenes Datenpaket; und, getriggert durch die empfangene Deaktivierungs-Kontrollnachricht (230d, 250u, 260u), Unterbrechen der ständigen Bereitstellung von der VoIP-Verbindung auf dem Datenkanal für die Aufwärtsrichtung und/oder dem Datenkanal für die Abwärtsrichtung (2us, 2ds) zugeteilten Netzwerkbetriebsmitteln.

3. Das Verfahren nach Anspruch 1,
**dadurch gekennzeichnet,**
**dass** das Verfahren weiterhin die folgenden Schritte umfasst:
Anhängen, in dem Übertragungspfad für die Aufwärtsrichtung (2uc, 2us), der Reaktivierungs-Kontrollnachricht (220u) an eine über den Kontrollkanal (2uc) vom Endgerät (11) an die Basisstation (10) übertragene Kontrollnachricht, insbesondere an eine die Kanalqualität betreffende Kontrollnachricht; und, getriggert durch die empfangene Reaktivierungs-Kontrollnachricht (220u), erneutes Erteilen der ständigen Bereitstellung von der VoIP-Verbindung auf dem Datenkanal für die Aufwärtsrichtung (2us) zugeteilten Netzwerkbetriebsmitteln.

4. Das Verfahren nach Anspruch 1,
**dadurch gekennzeichnet,**
**dass** das Verfahren weiterhin die folgenden Schritte umfasst:
Senden der Reaktivierungs-Kontrollnachricht (221u) im Übertragungspfad für die Aufwärtsrichtung (2uc, 2us) als eine eindeutige Kontrollnachricht über den Kontrollkanal (2uc) unabhängig von anderen Kontrollnachrichten, welche vom Endgerät (11) an die Basisstation (10) übertragen werden; und,
getriggert von der empfangenen Reaktivierungs-Kontrollnachricht (221u), erneutes Erteilen der ständigen Bereitstellung von der VoIP-Verbindung auf dem Datenkanal für die Aufwärtsrichtung (2us) zugeteilten Netzwerkbetriebsmitteln.

5. Das Verfahren nach Anspruch 1,
**dadurch gekennzeichnet,**
**dass** das Verfahren weiterhin die folgenden Schritte umfasst:
Senden der Reaktivierungs-Kontrollnachricht (21d) im Übertragungspfad für die Abwärtsrichtung (2dc, 2ds) als eine eindeutige Kontrollnachricht unabhängig von anderen Kontrollnachrichten, welche von der Basisstation (10) an den Endgerät (11) übertragen werden; und,
getriggert von der empfangenen Reaktivierungs-Kontrollnachrlcht (21d), erneutes Erteilen der ständigen Bereitstellung von der VoIP-Verbindung auf dem Datenkanal für die Abwärtsrichtung (2ds) zugeteilten Netzwerkbetriebsmitteln.

6. Eine Basisstation (10) zur Bereitstellung von VoIP-Verbindungen über drahtlose Kommunikationsverbindungen (2) eines paketbasierten drahtlosen Kommunikationssystems (1), wobei die drahtlosen Kommunikationsverbindungen (2) einen Übertragungspfad für die Aufwärtsrichtung (2uc, 2us) von einem Endgerät (11) zu einer Basisstation (10) und einen Übertragungspfad für die Abwärtsrichtung (2dc, 2ds) von der Basisstation (10) zum Endgerät (11) umfassen, wobei sowohl der Übertragungspfad für die Aufwärtsrichtung als auch der Übertragungspfad für die Abwärtsrichtung (2uc, 2us, 2dc, 2ds) über einen Kontrollkanal (2uc, 2dc) und mindestens einen Datenkanal (2us, 2ds) verfügen,
**dadurch gekennzeichnet,**
**dass** die Basisstation eine Kontrolleinheit (103) umfasst, welche fähig ist, eine Deaktivierungs-Kontrollnachricht (230d) zum Unterbrechen einer ständigen Bereitstellung von der VoIP-Verbindung zugeteilten Netzwerkbetriebsmitteln bei Erkennen eines Endes (24) einer aktiven Sprachperiode auf dem Datenkanal für die Abwärtsrichtung (2ds) und/oder eine Reaktivierungs-Kontrollnachricht (21d) zum erneuten Erteilen der ständigen Bereitstellung von der VoIP-Verbindung zugeteilten Netzwerkbetriebsmitteln bei Erkennen eines Anfangs (231d) einer aktiven Sprachperiode auf dem Datenkanal für die Abwärtsrichtung (2ds) zu erzeugen; und die Kontrolleinheit (103) weiterhin fähig ist, die Deaktivierungs- und/oder Reaktivierungs-Kontrollnachricht (230d, 21d) auf dem Datenkanal (2ds) und/oder auf dem Kontrollkanal (2dc) an das Endgerät (11) zu übertragen, um das Unterbrechen und/oder das erneute Ertellen der ständigen Bereitstellung von der VoIP-Verbindung auf dem Datenkanal für die Abwärtsrichtung (2ds) zugeteilten Netzwerkbetriebsmittein zu triggern,

7. Ein Endgerät (11) zur Bereitstellung einer VoIP-Verbindung über drahtlose Kommunikationsverbindungen (2) eines paketbasierten drahtlosen Kommunikationssystems (1), wobei die drahtlosen Kommunikationsverbindungen (2) einen Übertragungspfad für die Aufwärtsrichtung (2uc, 2us) vom Endgerät (11) zu einer Basisstation (10) und einen Übertragungspfad für die Abwärtsrichtung (2dc, 2ds) von der Basisstation (10) zum Endgerät (11) umfassen, wobei sowohl der Übertragungspfad für die Aufwärtsrichtung als auch der Übertragungspfad für die Abwärtsrichtung (2uc, 2us, 2dc, 2ds) über einen Kontrollkanal (2uc, 2dc) und mindestens einen Datenkanal (2us, 2ds) verfügen,
**dadurch gekennzeichnet,**
**dass** das Endgerät (11) eine Kontrolleinheit (113) umfasst, welche fähig ist, eine Deaktivierungs-Kontrollnachricht (250u, 260u) zum Unterbrechen einer ständigen Bereitstellung von der VoIP-Verbindung zugeteilten Netzwerkbetriebsmitteln bei Erkennen eines Endes (26, 27) einer aktiven Sprachperiode auf dem Datenkanal für die Aufwärtsrichtung (2us) und/oder eine Reaktivierungs-Kontrollnachricht (220u, 221u) zum erneuten Erteilen der ständigen Bereitstellung von der VoIP-Verbindung zugeteilten Netzwerkbetriebsmitteln bei Erkennen eines Anfangs (251u, 252u) einer aktiven Sprachperiode auf dem Datenkanal für die Aufwärtsrichtung (2us) zu erzeugen; und die Kontrolleinheit (113) weiterhin fähig ist. die Deaktivierungs- und/oder Reaktivierungs-Kontrollnachricht (250u, 260u, 220u, 221 u) auf dem Datenkanal (2us) und/oder auf dem Kontrollkanal (2uc) an die Basisstation (10) zu übertragen, um das Unterbrechen und/oder das erneute Erteilen der ständigen Bereitstellung von der VoIP-Verbindung auf dem Datenkanal für die Aufwärtsrichtung (2us) zugeteilten Netzwerkbetriebsmitteln zu triggern.

## Revendications

1. Procédé pour réaliser une connexion VoIP par le biais de liaisons de communication sans fil (2) d'un système de communication sans fil en paquets (1), les liaisons de communication sans fil (2) comprenant un chemin de transmission montant (2uc, 2us) d'un terminal (11) vers une station de base (10) et un chemin de transmission descendant (2dc, 2ds) de la station de base (10) vers le terminal (11), chacun des chemins de transmission montant et descendant (2uc, 2us, 2dc, 2ds) ayant un canal de commande (2uc, 2dc) et au moins un canal de données (2us, 2ds),
**caractérisé en ce**
**que** le procédé comprend les étapes suivantes :
Allocation d'une concession permanente des ressources du réseau à la connexion VoIP sur le chemin de transmission montant (2uc, 2us) et/ou sur le chemin de transmission descendant (2dc, 2ds) ;
Génération d'un message de commande de désactivation (230d, 250u, 260u) pour suspendre la concession permanente des ressources du réseau allouée à la connexion VoIP sur détection d'une fin (24, 26, 27) d'une période de parole active sur le canal de données montant et/ou descendant (2us, 2ds) et/ou d'un message de commande de réactivation (21 d, 220u, 221 u) pour rétablir la concession permanente des ressources du réseau allouée à la connexion VoIP sur détection d'un début (231d, 251u, 252u) d'une période de parole active sur le canal de données montant et/ou descendant (2us, 2ds);
Transmission du message de commande de désactivation et/ou de réactivation (230d, 250u, 260u, 21d, 220u, 221u) sur le canal de données et/ou le canal de commande (2dc, 2uc, 2ds, 2us) ;
Réception du message de commande de désactivation et/ou de réactivation au niveau de la station de base (10) et/ou du terminal (11) ; et
Suspension et/ou rétablissement, déclenché par le message de commande de désactivation et/ou de réactivation (230d, 250u, 260u, 21d, 220u, 221u) reçu, de la concession permanente des ressources du réseau allouée à la connexion VoIP sur le canal de données montant et/ou descendant (2us, 2ds).

2. Procédé selon la revendication 1,
**caractérisé en ce**
**que** le procédé comprend les étapes supplémentaires suivantes :
Accrochage, dans le chemin de transmission montant et/ou descendant (2uc, 2us, 2dc, 2ds), du message de commande de désactivation (230d, 250u, 260u) à un paquet de données émis par le biais du canal de données (2us, 2ds) ; et
Suspension déclenchée par le message de désactivation (230d, 250u, 260u) reçu d'une concession permanente de ressources du réseau allouée à la connexion VoIP dans le chemin de données montant et/ou descendant (2us, 2ds).

3. Procédé selon la revendication 1,
**caractérisé en ce**
**que** le procédé comprend les étapes supplémentaires suivantes :
Accrochage, dans le chemin de transmission montant (2uc, 2us), du message de commande de réactivation (220u) à un message de commande qui est transmis par le biais du canal de commande (2uc) du terminal (11) à la station de base (10), notamment à un message de commande en rapport avec la qualité du canal ; et, Rétablissement déclenché par le message de commande de réactivation (220u) reçu de la concession permanente des ressources du réseau allouée à la connexion VoIP sur le canal de données montant (2us).

4. Procédé selon la revendication 1,
**caractérisé en ce**
**que** le procédé comprend les étapes supplémentaires suivantes :
Envoi, dans le chemin de transmission montant (2uc, 2us), du message de commande de réactivation (221 u) sous la forme d'un message de commande explicite par le biais du canal de commande (2uc) indépendamment des autres messages de commande qui sont transmis du terminal (11) à la station de base (10) ; et,
Rétablissement déclenché par le message de commande de réactivation (221 u) reçu de la concession permanente des ressources du réseau allouée à la connexion VoIP sur le canal de données montant (2us).

5. Procédé selon la revendication 1,
**caractérisé en ce**
**que** le procédé comprend les étapes supplémentaires suivantes :
Envoi, dans le chemin de transmission descendant (2dc, 2ds), du message de commande de réactivation (21d) sous la forme d'un message de commande explicite indépendamment des autres messages de commande qui sont transmis de la station de base (10) au terminal (11) ; et
Rétablissement, déclenché par le message de commande de réactivation (21d) reçu, de la concession permanente des ressources du réseau allouée à la connexion VoIP sur le canal de données descendant (2dc).

6. Station de base (10) pour réaliser des connexions VoIP par le biais de liaisons de communication sans fil (2) d'un système de communication sans fil en paquets (1), les liaisons de communication sans fil (2) comprenant un chemin de transmission montant (2uc, 2us) d'un terminal (11) vers la station de base (10) et un chemin de transmission descendant (2dc, 2ds) de la station de base (10) vers le terminal (11), chacun des chemins de transmission montant et descendant (2uc, 2us, 2dc, 2ds) ayant un canal de commande (2uc, 2dc) et au moins un canal de données (2us, 2ds),
**caractérisé en ce**
**que** la station de base (10) comprend un module de commande (103) conçu pour générer un message de commande de désactivation (230d) pour suspendre la concession permanente des ressources du réseau allouée à la connexion VoIP sur détection d'une fin (24) d'une période de parole active sur le canal de données descendant (2ds) et/ou un message de commande de réactivation (21d) pour rétablir la concession permanente des ressources du réseau allouée à la connexion VoIP sur détection d'un début (231d) d'une période de parole active sur le canal de données descendant (2ds) ; et le module de commande (103) est en plus conçu pour transmettre le message de commande de désactivation et/ou de réactivation (230d, 21 d) sur le canal de données (2ds) et/ou le canal de commande (2dc) au terminal (11) pour déclencher la suspension et/ou le rétablissement de la concession permanente des ressources du réseau allouée à la connexion VoIP sur le canal de données descendant (2ds).

7. Terminal (10) pour réaliser une connexion VoIP par le biais de liaisons de communication sans fil (2) d'un système de communication sans fil en paquets (1), les liaisons de communication sans fil (2) comprenant un chemin de transmission montant (2uc, 2us) du terminal (11) vers une station de base (10) et un chemin de transmission descendant (2dc, 2ds) de la station de base (11) vers le terminal (11), chacun des chemins de transmission montant et descendant (2uc, 2us, 2dc, 2ds) ayant un canal de commande (2uc, 2dc) et au moins un canal de données (2us, 2ds),
**caractérisé en ce**
**que** le terminal (11) comprend un module de commande (113) conçu pour générer un message de commande de désactivation (250u, 260u) pour suspendre la concession permanente des ressources du réseau allouée à la connexion VoIP sur détection d'une fin (28, 27) d'une période de parole active sur le canal de données montant (2us) et/ou un message de commande de réactivation (220u, 221u) pour rétablir la concession permanente des ressources du réseau allouée à la connexion VoIP sur détection d'un début (251 u, 252u) d'une période de parole active sur le canal de données montant (2us) ; et le module de commande (113) est en plus conçu pour transmettre le message de commande de désactivation et/ou de réactivation (250u, 260u, 220u, 221 u) sur le canal de données (2us) et/ou le canal de commande (2uc) à la station de base (10) pour déclencher la suspension et/ou le rétablissement de la concession permanente des ressources du réseau allouée à la connexion VoIP sur le canal de données montant (2us).
